# EUROPEAN PATENT APPLICATION

(11) **EP 4 692 900 A1**
(43) Date of publication of application: **11.02.2026**
(21) Application number: 25189404.4
(22) Date of filing: 14.07.2025
(51) Int. Cl.: G02B 27/01, B60K 35/23, B60K 35/231, B60K 35/50, F16F 15/04

(54) **HEAD-UP DISPLAY**

(30) Priority: 05.08.2024 KR 20240103704
(71) Applicant: Hyundai Mobis Co., Ltd., Gangnam-gu Seoul (KR)
(72) Inventor: KIM, Byung Ki, 16931 Yongin-si, Gyeonggi-do (KR)
(74) Representative: Jung, Minkyu

(57) **Abstract**

A head-up display is provided. The head-up display includes: a housing including an upper case and a lower case for engaging the upper case; a picture generation unit (PGU) for generating an image, the PGU housed in the housing; a rotator housed in the housing; a mounting portion formed on one side of the housing and including one or more through holes; a connecting bracket for coupling the head-up display to a cockpit of a vehicle; a first connecting member for coupling the mounting portion and the connecting bracket; a first flange for functioning as a stopper for the first connecting member; and a grommet surrounding at least a portion of the body portion of the first flange.

## Description

### CROSS-REFERENCE TO RELATED APPLICATION(S)

This application claims the benefit under 35 USC § 119(a) of Korean Patent Application No. 10-2024-0103704 filed on August 5, 2024, in the Korean Intellectual Property Office, the entire disclosure of which is hereby incorporated by reference for all purposes.

### BACKGROUND

### 1. Field

The present disclosure relates to a head-up display.

### 2. Description of the Related Art

The content described in this part merely provides background information for the present disclosure, but does not constitute the related art.

A head-up display device is located in a cockpit of the vehicle. The head-up display is a device that displays an image including the speed of the vehicle, the remaining amount of fuel, the road guidance information, and the like on a windshield that is a front window of the vehicle. In general, the head-up display is configured to represent display information projected from a picture generate unit (PGU) on the windshield.

The head-up display may be subjected to vibrations by internal components of the head-up display or vibrations occurring outside of the head-up display.

The head-up display according to the related art rotates an aspheric mirror by using a motor located inside the head-up display. As revolutions per minute (RPM) of the motor increase, the vibrations that occur in the motor increase.

The vibration generated outside the head-up display may be vibration due to idling of the engine, that is, idle vibration or the like when the vehicle passes through unevenness of the road surface while traveling or when the vehicle is stopped.

When vibrations are applied to the head-up display, the vibrations may cause the letters or images represented on the windshield to look shaky. This causes the driver to be unable to read information properly, and there is a problem that the driver may feel fatigued.

Moreover, for a head-up display that has already been assembled and installed, there is a problem that it is difficult to change a vibration absorption and blocking structure inside the head-up display.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject. matter.

The head-up display according to an embodiment may absorb and block vibration transmitted from an internal component of the head-up display or the outside of the head-up display.

The head-up display according to an embodiment may absorb and block vibration applied to the head-up display by providing the vibration absorbing portion outside the housing without changing the internal structure even when the assembly and installation are already completed.

The problems to be solved by the present invention are not limited to the above-mentioned problems, and other problems that are not mentioned will be clearly understood by those skilled in the art from the following description.

In a general aspect of the disclosure, a head-up display includes: a housing including an upper case and a lower case for engaging the upper case; a picture generation unit (PGU) for generating an image, the PGU housed in the housing; a rotator housed in the housing; a mounting portion formed on one side of the housing and including one or more through holes; a connecting bracket for coupling the head-up display to a cockpit of a vehicle; a first connecting member for coupling the mounting portion and the connecting bracket; a first flange configured to function as a stopper for the first connecting member; and a grommet surrounding at least a portion of the body portion of the first flange.

The grommet may include an inner circumferential length that is longer than the outer circumferential length of the body portion of the first flange.

The grommet may further include an inclined portion having a chamfered shape such that a corner of a cross-section of an end of the grommet in the longitudinal direction, as viewed in a direction perpendicular to the longitudinal direction of the grommet, is inclined.

The mounting portion may further include an inclined protrusion having a chamfered shape such that a corner of a cross-section of at least one region of an inner circumferential surface of the through hole of the mounting portion is inclined.

The grommet may be made of rubber.

In another general aspect of the disclosure, a head-up display includes: a housing including an upper case and a lower case for engaging the upper case; a picture generation unit (PGU) for generating an image, the PGU housed in the housing; a rotator housed in the housing; a mounting portion formed on one side of the housing and including one or more through holes; a connecting bracket for coupling the head-up display in a cockpit of a vehicle; a second connecting member for coupling the mounting portion and the connecting bracket; a second flange configured to function as a stopper with respect to the second connecting member; and a weight member disposed between a head portion of the second connecting member and the second flange.

The second flange and the weight member may be integrally formed.

The second connecting member, the second flange, and the weight member may be integrally formed.

The mounting portion may include a through hole formed in a direction through which the first connecting member is inclined in an upper direction.

The mounting portion may further include a guide boss, wherein the connecting bracket may include a guide hole at a position corresponding to the guide boss.

The rotator may be configured to rotate an aspherical mirror.

The head-up display according to an embodiment has an effect of absorbing and blocking vibration transmitted from an internal component of the head-up display or the outside of the head-up display.

The head-up display according to an embodiment has an effect of absorbing and blocking vibration applied to the head-up display by providing the vibration absorbing portion outside the housing without changing the internal structure even when the assembly and installation are already completed.

### BRIEF DESCRIPTION OF THE DRAWINGS

FIG. 1 is a combined perspective view of a head-up display including a vibration absorbing portion according to a first embodiment of the present disclosure.
FIG. 2 is an exploded perspective view of a head-up display including a vibration absorbing portion according to a first embodiment of the present disclosure.
FIG. 3 is a cross-sectional view taken along A-A of FIG. 1.
FIG. 4 is an exploded perspective view of a vibration absorbing portion according to a second embodiment of the present disclosure.
FIG. 5 is an exploded perspective view of a vibration absorbing portion according to a third embodiment of the present disclosure.
FIG. 6 is a perspective view of a vibration absorbing portion according to a fourth embodiment of the present disclosure.

### DETAILED DESCRIPTION

Hereinafter, some embodiments of the present disclosure will be described in detail with reference to exemplary drawings. Note that when components in each drawing are denoted by reference numerals, the same components are denoted by the same numerals as much as possible even if they are denoted on different drawings. In addition, in describing the present disclosure, if it is determined that a specific description of a related known configuration or function may obscure the gist of the present disclosure, the detailed description thereof will be omitted.

In describing components of embodiments of the present disclosure, reference numerals such as first, second, i), ii), a), and b) may be used. These symbols are only used to distinguish the components from other components, and the nature, sequence, order, or the like of that component is not limited by the symbols. Throughout the specification, when it is stated that a certain portion "includes" or "comprises" a specific component, it shall be understood that, unless explicitly otherwise specified, this does not exclude other components but may further include additional components.

In describing the components of the present invention, the terms first, second, A, B, (a), (b), and the like may be used. These terms are only used to distinguish the components from other components, and the nature, sequence, order, or the like of the components is not limited by these terms.

When any component is described as being "connected," "coupled," or "linked" to another component, it should be understood that the component may be directly connected or linked to the other element, but another component may also be "connected," "coupled," or "linked" between each component.

Unless otherwise specified, it should be understood that the description of one embodiment may be applied to other embodiments.

The description set forth below in connection with the appended drawings is intended to describe exemplary embodiments of the invention and is not intended to represent the only embodiments in which the invention may be practiced.

In this specification, the first direction means a direction approximately parallel to the y-axis direction shown in the drawings. The second direction means a direction approximately parallel to the x-axis direction shown in the drawing. The upper direction means a direction approximately parallel to the z-axis direction shown in the drawing, and the lower direction means a direction opposite to the upper direction.

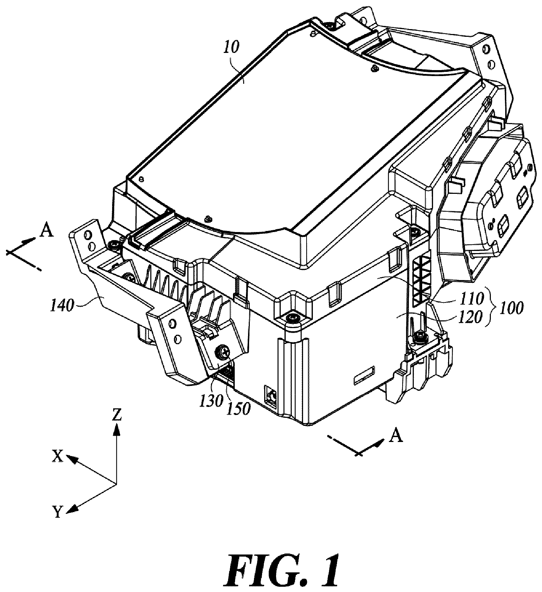

FIG. 1 is a combined perspective view of a head-up display including a vibration absorbing portion according to a first embodiment of the present disclosure.

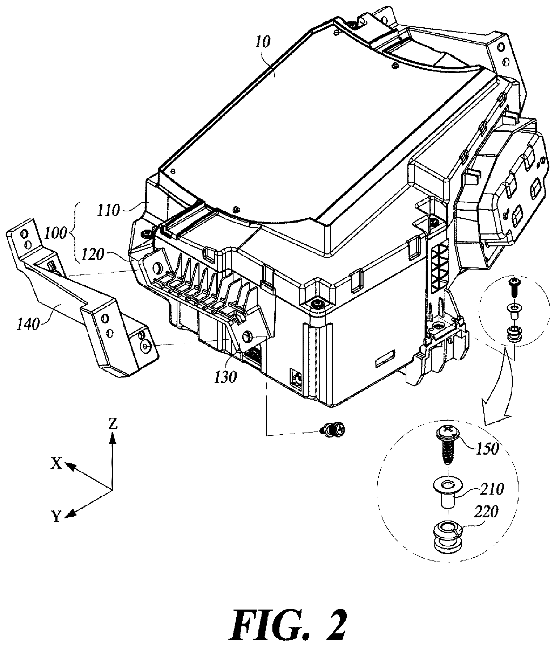

FIG. 2 is an exploded perspective view of a head-up display including a vibration absorbing portion according to a first embodiment of the present disclosure.

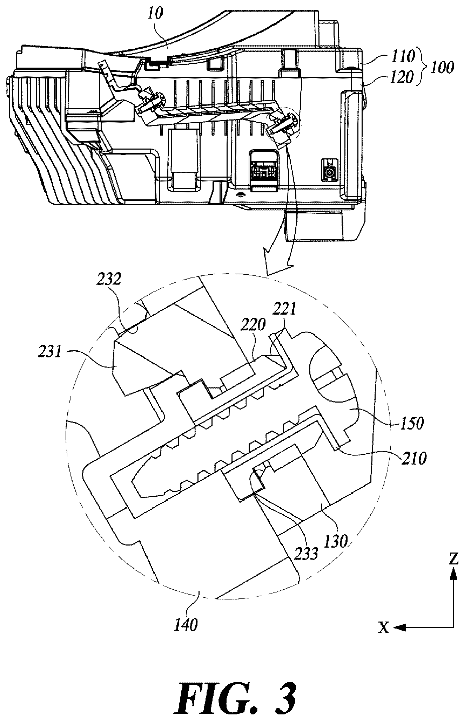

FIG. 3 is a cross-sectional view taken along A-A of FIG. 1.

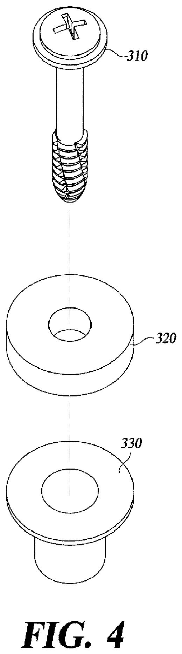

FIG. 4 is an exploded perspective view of a vibration absorbing portion according to a second embodiment of the present disclosure.

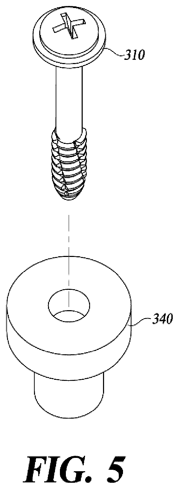

FIG. 5 is an exploded perspective view of a vibration absorbing portion according to a third embodiment of the present disclosure.

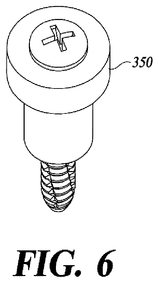

FIG. 6 is a perspective view of a vibration absorbing portion according to a fourth embodiment of the present disclosure.

Referring to FIGS. 1 to 6, a head-up display 10 may include all or some of an upper case 110, a lower case 120, a mounting portion 130, a connecting bracket 140, a first connecting member 150, a first flange unit 210, a grommet 220, a second connecting member 310, a first weight member 320 according to a first embodiment, a second flange unit 330, a second weight member 340 according to a second embodiment, and a third weight member 350 according to a third embodiment.

The housing 100 of the head-up display 10 includes an upper case 110 and a lower case 120 that engages the upper case 110. The housing 100 may accommodate a plurality of components for displaying an image on a windshield, such as a PGU (Picture Generation Unit, not shown) and a rotator (rotator, not shown) in an internal space of the housing 100.

The PGU may form an image containing the speed of the vehicle, the remaining amount of fuel, the directions information, and the like. The PGU may include an LED printed circuit board (LED PCB, not shown), a display (display, not shown), funnel (funnel, not shown), diffuser (diffuser, not shown), and the like.

The rotator raises and lowers a link unit (not shown) based on a rotational force of a motor (not shown) to rotate an aspherical mirror (not shown). By driving the motor to rotate the aspheric mirror, vibration may occur inside the housing 100.

The connecting bracket 140 may be coupled to a coupling portion (not shown) of the in-vehicle fab and the mounting portion 130 of the head-up display 10, respectively. That is, the connecting bracket 140 is disposed for coupling the head-up display 10 to a cockpit in a vehicle. The connecting bracket 140 may include all or a part of a through hole corresponding to the coupling portion of the anchor in the vehicle, a through hole corresponding to the mount 130, and a guide hole 232 corresponding to the guide boss 231 of the mount 130.

The mounting portion 130 may be formed on one side of the lower case 120. The mounting portion 130 may include all or some of a through hole and a guide boss 231 that may engage with the connecting bracket 140.

The first connecting member 150 or the second connecting member 310 may pass through the through hole of the mounting portion 130. The through hole of the mounting portion 130 may be formed in a direction through which the first connecting member 150 or the second connecting member 310 may penetrate so as to be inclined obliquely from the upper direction. By doing so, when the head-up display 10 is coupled to the in-vehicle fab based on the connecting bracket 140, it is possible to facilitate detachment and attachment of the head-up displaying 10 from the in-vehicle fab for repair or the like of the head-up display 10.

The guide boss 231 may be formed in a region adjacent to the through hole of the mounting portion 130 in a direction toward the connecting bracket 140.

By arranging the guide hole 232 of the connecting bracket 140 and the guide boss 231 of the mounting portion 130, convenient and accurate assembly is possible. After the connecting bracket 140 and the head-up display 10 are pre-assembled such that the guide boss 231 passes through the guide hole 232, the connecting bracket 140 may be assembled to be coupled to the head-up device 10 by using the first connecting member 150 or the second connecting member 310.

Referring to FIGS. 2 and 3, the vibration absorber according to a first embodiment of the present disclosure may include the first connecting member 150, the first flange unit 210, and the grommet 220.

The grommet 220 may include a through-hole in the center. The grommet 220 may surround at least a portion of the body portion of the first flange unit 210. The body portion of the first flange unit 210 and the first connecting member 150 may penetrate and couple to the grommet 220. The diameter of the through-hole of the grommet 220 may correspond to the diameter of the outer peripheral surface of the body portion of the first flange unit 210.

A diameter of an outer peripheral surface of one end in the longitudinal direction of the grommet 220 may be formed to be larger than a diameter of the through hole of the mounting portion 130. Here, the longitudinal direction of the grommet 220 means a direction parallel to the direction in which the first connecting member 150 penetrates. One end of the grommet 220 in the longitudinal direction means a region in a direction opposite to a direction in which the head portion of the first connecting member 150 is located when the first connecting members 150 are threadingly coupled. The grommet 220 may include an inclined portion 221 at the other longitudinal end of the grommet 220. The inclined portion 221 means a chamfered region in which a corner of a cross-section of the other end in the longitudinal direction of the grommet 220 as viewed in a direction perpendicular to the longitudinal direction of a grommet 220 is inclined. Here, the other end of the grommet 220 in the longitudinal direction means a direction opposite to the one end of the grommet 220 in the lengthwise direction. The material of the grommet 220 may be an elastic material such as rubber.

The through hole of the mounting portion 130 may include an inclined protruding portion 233 corresponding to the inclined portion 221 of the grommet 220 on the inner circumferential surface.

By arranging the inclined portion 221 of the grommet 220 and the inclined protruding portion 233 formed on the inner circumferential surface of the through hole of the mounting portion 130, the grommets 220 may be easily coupled to the mounting portion 130. In addition, after the grommet 220 is coupled to the mounting portion 130, the grommets 220 may be fixed so that the grommet 22 does not fall off from the mounting portion 130.

The body portion of the first flange unit 210 may be coupled to a through-hole formed in the center of the grommet 220. The first connecting member 150 may be coupled through the first flange unit 210. The first flange unit 210 may compress the grommet 220 by using the flange portion of the first flange unit 210, and at the same time, may function as a stopper with respect to the first connecting member 150. Here, the flange portion of the first flange unit 210 refers to a region bent and extended from the body portion of the first flange unit 210.

In the coupling order, first, the grommet 220 is coupled so as to penetrate the through hole of the mounting portion 130. Then, the guide boss 231 of the mounting portion 130 and the guide hole 232 of the connecting bracket 140 are engaged and temporarily assembled. Then, the first flange unit 210 is engaged through the grommet 220, and the first connecting member 150 is engaged through the first flange unit 210. At this time, when the first connecting member 150 is tightened, the end of the body portion of the first flange unit 210 comes into contact with the connecting bracket 140. In this process, the mounting portion 130 and the connecting bracket 140 may be coupled to each other while the grommet 220 is compressed by a predetermined length. Therefore, the length of the inner circumferential surface of the grommet 220 is preferably longer than the length of the outer peripheral surface of the body portion of the first flange unit 210 before the first connecting member 150 is coupled.

Referring to FIG. 4, a vibration absorber according to a second embodiment of the present disclosure includes the second connecting member 310, the second flange unit 330, and the first weight member 320 according to the first embodiment. The vibration absorbing unit according to the second embodiment of the present disclosure may have a cantilever shape in which one end is fixed and the opposite end extends freely. The vibration absorbing portion according to the second embodiment of the present disclosure may be a structure having appropriate rigidity and weight by arranging the second flange unit 330 and the first weight member 320 according to the first embodiment. When vibration occurs, the vibration absorbing portion according to the second embodiment of the present disclosure, which is a cantilever shape, absorbs the vibration to disperse energy, and the first weight member 320 according to the first embodiment provides an inertial force, so that the vibration may be more effectively absorbed.

The diameter of the outer peripheral surface of the body portion of the second flange unit 330 that may abut the mounting portion 130 may be formed to be larger than the diameter of the through hole of the mounting portion 130. That is, unlike the first flange unit 210, the second flange unit 330 does not pass through the through hole of the mounting portion 130. The second flange unit 330 may serve as a stopper with respect to the second connecting member 310. The diameter of the flange portion of the Second flange unit 330 may be formed to correspond to the diameter of the first weight member 320 according to the first embodiment. Here, the flange portion of the second flange unit 330 means a region that is bent and extended from the body portion of the second flange unit 330.

The first weight member 320 according to the first embodiment may form a through-hole in the center. The first weight member 320 according to the first embodiment is fixedly disposed between the Second flange unit 330 and the head portion of the second connecting member 310. Therefore, the diameter of the through-hole formed in the center of the first weight member 320 according to the first embodiment is preferably formed to be smaller than the diameter of the head portion of the second connecting member 310.

In the joining sequence, first, the guide boss 231 of the mounting portion 130 and the guide hole 232 of the connecting bracket 140 are joined and temporarily assembled. Then, the second flange unit 330 and the first weight member 320 according to the first embodiment are sequentially disposed at positions corresponding to the through holes of the mounting portion 130. Then, the second connecting member 310 is disposed to penetrate the second flange unit 330 and the first weight member 320 according to the first embodiment. When the second connecting member 310 is tightened, the mounting portion 130 and the connecting bracket 140 may be coupled to each other while compressing the second flange unit 330 and the first weight member 320 according to the first embodiment.

Unlike the vibration absorber according to the first embodiment, the vibration absorber of the second embodiment may not be coupled to the inside of the mounting portion 130. Therefore, it is preferable to apply a screw having a longer length than that of the first connecting member 150 to the second connecting member 310.

Referring to FIG. 5, the vibration absorbing portion according to the third embodiment of the present disclosure may include a second connecting member 310 and the second weight member 340 according to the second embodiment of the present invention.

In the following, the contents overlapping with the vibration absorbing portion according to the second embodiment of the present disclosure will be omitted. The second weight member 340 according to the second embodiment may be formed by integrally forming the second flange unit 330 and the first weight member 320 according to the first embodiment.

Referring to FIG. 6, the vibration absorbing portion according to the fourth embodiment of the present disclosure may be integrally formed with the second flange unit 330, the first weight member 320 according to the first embodiment, and the second connecting member 310.

The vibration absorbing portion according to the third or fourth embodiment of the present disclosure may be formed so that there is no empty space inside the second flange unit 330, thereby forming a density higher than that of the vibration absorbing portion of the second embodiment of the present invention.

The foregoing descriptions are merely illustrative of the technical concept of the present embodiment, and various modifications and variations may be made by those skilled in the art without departing from the essential characteristics of the present embodiment. Therefore, the present embodiments are not intended to limit the technical concept of the present embodiments, but are intended to be illustrative, and the scope of the technical concept of this embodiment is not limited by these embodiments. The protection scope of the present embodiment is to be construed according to the following claims, and all technical ideas within the scope equivalent thereto are construed as being included in the scope of rights of the present embodiment.

## Claims

1. A head-up display, comprising:
a housing comprising an upper case and a lower case for engaging the upper case;
a picture generation unit (PGU) for generating an image, the PGU housed in the housing;
a rotator housed in the housing;
a mounting portion formed on one side of the housing and comprising one or more through holes;
a connecting bracket for coupling the head-up display to a cockpit of a vehicle;
a first connecting member for coupling the mounting portion and the connecting bracket;
a first flange configured to function as a stopper for the first connecting member; and
a grommet surrounding at least a portion of the body portion of the first flange.

2. The head-up display of claim 1, wherein the grommet comprises an inner circumferential length that is longer than the outer circumferential length of the body portion of the first flange.

3. The head-up display of claim 1 or 2, wherein the grommet comprises:
an inclined portion having a chamfered shape such that a corner of a cross-section of an end of the grommet in the longitudinal direction, as viewed in a direction perpendicular to the longitudinal direction of the grommet, is inclined.

4. The head-up display of any one of claims 1 to 3, wherein the mounting portion further comprises:
an inclined protrusion having a chamfered shape such that a corner of a cross-section of at least one region of an inner circumferential surface of the through hole of the mounting portion is inclined.

5. The head-up display of any one of claims 1 to 4, wherein the grommet is made of rubber.

6. A head-up display, comprising:
a housing comprising an upper case and a lower case for engaging the upper case;
a picture generation unit (PGU) for generating an image, the PGU housed in the housing;
a rotator housed in the housing;
a mounting portion formed on one side of the housing and including one or more through holes;
a connecting bracket for coupling the head-up display in a cockpit of a vehicle;
a second connecting member for coupling the mounting portion and the connecting bracket;
a second flange configured to function as a stopper with respect to the second connecting member; and
a weight member disposed between a head portion of the second connecting member and the second flange.

7. The head-up display of claim 6, wherein the second flange and the weight member are integrally formed.

8. The head-up display of claim 6 or 7, wherein the second connecting member, the second flange, and the weight member are integrally formed.

9. The head-up display of any one of claims 1 to 5, wherein the mounting portion comprises:
a through hole formed in a direction through which the first connecting member is inclined in an upper direction.

10. The head-up display of any one of claims 1 to 9, wherein the mounting portion further includes a guide boss, and
wherein the connecting bracket comprises a guide hole at a position corresponding to the guide boss.

11. The head-up display of any one of claims 1 to 5, 9 and 10, wherein the rotator is configured to rotate an aspherical mirror.

12. The head-up display of any one of claims 6 to 8, wherein the rotator is configured to rotate an aspherical mirror.
